Europäisches Patentamt

European Patent Office

Office européen des brevets

(19)

(11) Numéro de publication : **0 133 411 B1**

(12) **FASCICULE DE BREVET EUROPÉEN**

(45) Date de publication du fascicule du brevet :
07.09.88

(51) Int. Cl.⁴ : **B 23 K  9/02**, B 23 K  7/04

(21) Numéro de dépôt : **84430022.8**

(22) Date de dépôt : **25.06.84**

(54) **Procédé et machines pour souder ou découper automatiquement la jonction entre un tube principal et un tube secondaire en dérivation.**

(30) Priorité : **22.07.83 FR 8312307**

(43) Date de publication de la demande :
**20.02.85 Bulletin 85/08**

(45) Mention de la délivrance du brevet :
**07.09.88 Bulletin 88/36**

(84) Etats contractants désignés :
**AT BE CH DE GB IT LI LU NL SE**

(56) Documents cités :
**DE-A- 2 713 541**
**DE-A- 3 005 153**
**US-A- 4 349 182**
**US-A- 4 384 901**

(73) Titulaire : **SOCIETE NOUVELLE DES ATELIERS ET CHANTIERS DU HAVRE**
**30 rue Jean-Jacques Rousseau**
**F-76066 Le Havre (FR)**

(72) Inventeur : **Berne, Jean**
**Villa Clairette Le Tholonet**
**F-13100 Aix-en-Provence (FR)**
Inventeur : **Livet, Georges**
**11, Touret des Valliers**
**F-13500 Martiques (FR)**

(74) Mandataire : **Azais, Henri et al**
**c/o CABINET BEAU DE LOMENIE 14, rue Raphael**
**F-13008 Marseille (FR)**

EP 0 133 411 B1

## Description

L'invention a pour objet des procédés et une machine pour souder automatiquement la jonction entre un tube principal et un ou plusieurs tubes secondaires en dérivation ou pour découper automatiquement lesdits tubes suivant une ligne de jonction.

Le secteur technique est celui de la construction des machines automatiques ou robots de soudage ou de découpage des structures tubulaires comportant des noeuds de jonction entre tubes.

Le problème à résoudre est de réaliser automatiquement la soudure entre un tube principal ou une virole cylindrique et un ou plusieurs tubes secondaires qui doivent être soudés en dérivation sur celui-ci et ceci au moyen d'une machine capable de s'adapter à des paramètres géométriques différents (diamètres et épaisseur des tubes, écart angulaire et distance entre les axes des deux tubes, position de la jonction, longueur des tubes) et à des paramètres de soudure différents (vitesse de soudure, forme du chanfrein).

On connaît déjà des machines à souder automatiques capables de souder bout à bout deux tubes ou deux viroles ou portions de viroles cylindriques.

On connaît également des machines à découper capables de découper l'extrémité d'un tube secondaire suivant une ligne de jonction en dérivation sur un tube principal.

Le brevet U.S-A-4.384.901 (LAME Inc.) décrit une machine à découper et à chanfreiner automatiquement un tube. Cette machine comporte des galets qui supportent le tube à découper et qui le font tourner autour de son axe longitudinal.

Elle comporte un bras télescopique qui se déplace parallèlement à l'axe du tube et qui porte un secteur circulaire portant la torche de découpage qui pivote autour d'un axe horizontal perpendiculaire à l'axe du tube et tangent au sommet du tube.

La soudure automatique des noeuds de jonction entre un tube principal et un ou plusieurs tubes secondaires soudés en dérivation sur le tube principal pose des problèmes complexe car l'intersection des deux tubes est une courbe gauche et, à ce jour, pour le cas général, on ne sait faire ce type de soudure que manuellement. De plus, pour obtenir une soudure automatique de très bonne qualité, il est préférable de souder à plat au moyen d'une électrode maintenue verticalement au-dessus du chanfrein de soudure et sensiblement dans le plan bissecteur du chanfrein de soudure.

Pour arriver à ce résultat, il est nécessaire, non seulement de déplacer automatiquement la ou les têtes de soudure, en les maintenant verticales, suivant trois axes trirectangulaires afin de lui ou de leur faire suivre la courbe intersection des deux tubes dont les coordonnées peuvent être calculées, mais encore, il faut positionner constamment la pièce à souder pour l'orienter, de telle sorte que le plan bissecteur du chanfrein de soudure correspondant au point situé sous une électrode, soit sensiblement vertical et que l'électrode soit donc placée sensiblement dans le plan bissecteur.

Si cette condition est remplie, la soudure se répartit de façon sensiblement symétrique de part et d'autre du plan bissecteur et on obtient un cordon de soudure homogène et symétrique. De plus, de nombreux procédés de soudure électrique automatique nécessitent l'utilisation d'un flux protecteur qui peut être un flux composé de particules solides. Ce flux forme un tas qui doit se repartir pour recouvrir le cordon de soudure en cours de solidification. Pour atteindre ce résultat et pouvoir utiliser un flux pulvérulent, il faut que les électrodes soient sensiblement dans le plan bissecteur du chanfrein au moment de la soudure.

Les objectifs de l'invention sont atteints au moyen de procédés de soudage et de découpage ainsi que d'une machine tels que définis respectivement dans les revendications 1 à 3.

Les machines à souder selon l'invention présentent l'avantage que les têtes de soudure travaillent constamment en position verticale et dans le plan de symétrie du chanfrein de soudage, ce qui permet d'utiliser un flux pulvérulent et assure une très bonne qualité des soudures.

Les machines à souder selon l'invention peuvent être utilisées dans toutes les fabrications mécaniques comportant des travaux de soudure de jonction entre pièces cylindriques par exemple pour connecter des tubes en dérivation sur un tube principal ou pour réaliser des noeuds de structures tubulaires telles que des plateformes en mer.

Grâce au fait que les têtes de soudage ou de découpe sont montées sur un portique mobile, qui peut être éloigné du support de positionnement, il est possible de manutentionner des pièces très lourdes et très encombrantes avec des engins de levage pour les placer sur le support de positionnement ou pour les enlever de celui-ci.

La description suivante montre un exemple de réalisation d'une machine à souder selon l'invention.

La figure 1 est une vue en élévation d'une machine selon l'invention avec une coupe partielle du portique roulant.

La figure 2 est une vue en plan du bâti de la machine.

La figure 3 est un schéma des organes de calcul et d'asservissement effectuant la conduite automatique de la machine.

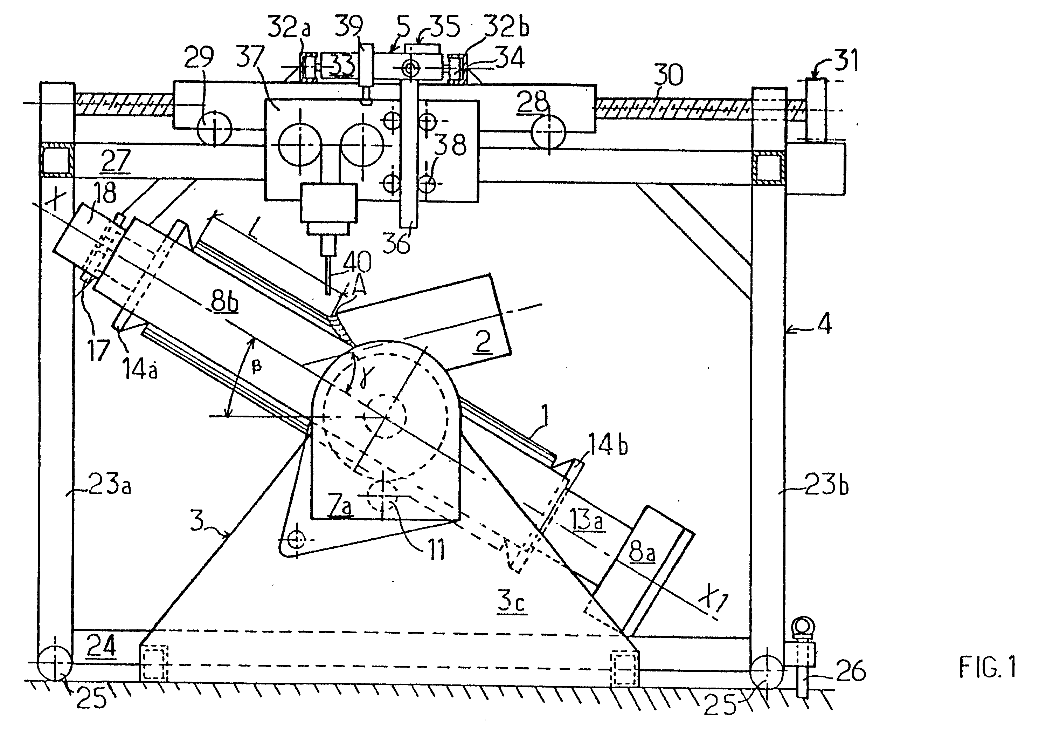

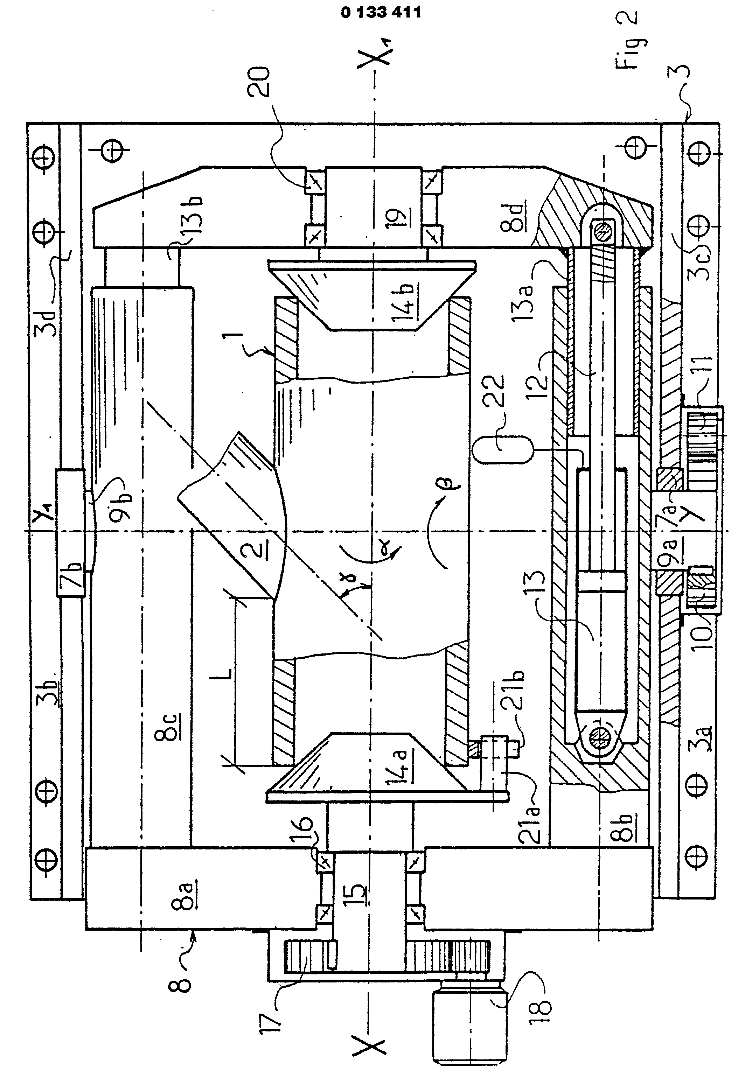

Les figures 1 et 2 représentent une machine à souder destinée à effectuer automatiquement la soudure d'un noeud de jonction entre un tube droit ou tube principal ou une virole cylindrique 1 de diamètre D1 et un tube secondaire 2 de diamètre D2 qui doit être soudé en dérivation sur le tube 1. Les axes des deux tubes 1 et 2 peuvent être situés dans un même plan ou non.

La machine selon l'invention est capable de s'adapter à des tubes dont les diamètres D1 et D2 peuvent prendre différentes valeurs ainsi qu'à des jonctions dont l'angle γ entre les axes des deux tubes peut varier ainsi que le décalage L entre l'extrémité du tube principal et la dérivation.

Elle peut également s'adapter à différentes vitesses de soudage et à différents angles d'ouverture du chanfrein de soudure qui varient selon l'épaisseur des tubes et selon l'écart angulaire γ.

Les figures 1 et 2 représentent une jonction comportant une seule dérivation, mais il est précisé qu'une machine selon l'invention peut souder également des noeuds de jonction comportant plusieurs dérivations ou plusieurs contreventements. Dans ce cas, la machine soude successivement chaque jonction.

Une machine selon l'invention peut être utilisée pour souder automatiquement des noeuds de jonction de structures tubulaires, par exemple les structures utilisées pour construire les plateformes en mer et, dans ce cas, les dérivations peuvent être soudées sur un tube principal qui est continu et ne comporte aucune découpe faisant communiquer les deux tubes.

Une machine selon l'invention peut également servir à souder une dérivation qui communique avec un tube principal ou avec une virole de réacteur ou autre appareil cylindrique, et, dans ce cas, le tube principal ou la virole est découpée.

Les machines selon l'invention sont destinées à effectuer automatiquement des soudures sur des ensembles qui peuvent être très lourds et peser plusieurs centaines de kilonewtons.

Les organes essentiels d'une machine selon l'invention sont un support positionneur 3 qui est fixé au sol et qui porte les pièces à souder, un portique roulant 4 qui vient se placer au-dessus du support positionneur et qui porte un ensemble mobile de soudage ou de découpage 5 déplaçables selon trois axes trirectangulaires et un ordinateur 6 qui reçoit les données qui caractérisent géométriquement une jonction et la soudure qui calcule automatiquement les coordonnées de chaque point de l'intersection des deux tubes et qui délivre cinq valeurs de consigne qui sont transmises à cinq boucles d'asservissement.

Avant de décrire en détail les organes de la machine, on exposera les grandes lignes du problème à résoudre.

Les tubes 1 et 2 sont des cylindres et dès lors que l'on connaît leurs paramètres géométriques, c'est-à-dire leurs diamètres respectifs D1 et D2, leurs épaisseurs, l'angle γ des axes et la position longitudinale L de la dérivation par rapport au tube principal et éventuellement l'écart entre les deux axes s'ils ne sont pas concourants, la courbe intersection des deux tubes est définie et il est donc possible de programmer un ordinateur pour qu'il calcule les coordonnées des différents points de la courbe à partir des paramètres géométriques qui sont des données introduites dans l'ordinateur au moyen d'un clavier ou de tout autre moyen d'introduction de données.

En variante les paramètres géométriques peuvent être mesurés par des capteurs qui sont raccordés à l'ordinateur par un circuit d'interface permettant à l'ordinateur de saisir directement les paramètres géométriques.

Une fois la courbe intersection définie et la vitesse de soudure déterminée, l'ordinateur peut délivrer périodiquement des données numériques correspondant par exemple aux coordonnées, mesurées suivant trois axes perpendiculaires, des points successifs de l'intersection.

Si la tête de soudage est déplaçable suivant ces trois axes, on pourrait envisager théoriquement de laisser la pièce à souder fixe et de déplacer automatiquement une ou plusieurs têtes de soudage pour qu'elles suivent automatiquement et à la vitesse désirée, la courbe intersection.

Mais ce procédé ne serait pas celui qui conduirait aux soudures de meilleurs qualité car l'électrode de soudure, qui a une direction fixe, se présenterait obliquement par rapport aux surfaces à souder et on ne pourrait utiliser un flux de soudage pulvérulent.

Dans le cas de tubes très épais, ce procédé serait même irréalisable.

L'objectif de l'invention est de procurer une machine à souder dans laquelle la soudure est constamment effectuée à plat, c'est-à-dire au moyen d'électrodes qui sont placées verticalement au-dessus du chanfrein de soudure et, de plus, en maintenant les électrodes sensiblement dans le plan bissecteur du chanfrein de soudure afin que les cordons de soudure soient réguliers et homogènes.

Ce résultat est atteint en déplaçant la tête de soudure suivant trois axes trirectangulaires et en faisant pivoter simultanément la jonction en cours de soudure autour de deux axes perpendiculaires dont l'un est confondu avec l'axe du tube principal.

Revenant aux figures, la figure 2 représente une vue en plan et partiellement en coupe du bâti positionneur qui supporte les pièces à souder et qui permet d'orienter automatiquement celles-ci.

Ce bâti comporte des longerons 3a, 3b qui sont fixés au sol, qui sont reliés entre eux par des traverses, et qui supportent deux joues ou flasques latéraux 3c, 3d, de forme générale triangulaire et situés dans deux plans parallèles.

Chaque joue porte, à son sommet, un palier, respectivement 7a, 7b. Les deux paliers définissent un axe transversal horizontal Y Y1.

Le bâti positionneur comporte un bâti basculant 8, qui comporte un cadre ouvert en forme de U composé d'une traverse 8a, parallèle à l'axe Y Y1 et de deux branches latérales 8b, 8c. Chaque branche latérale porte, du côté externe, un tourillon 9a, 9b. Ces tourillons sont supportés par les paliers 7a, 7b dans lesquels ils peuvent pivoter librement, de sorte que le bâti 8 peut basculer autour de l'axe transversal Y Y1.

L'un des tourillons, par exemple le tourillon 9a, porte un dispositif d'entraînement en rotation constitué par exemple d'un pignon d'entraînement 10 qui est entraîné en rotation, par exemple par un motoréducteur ou servomoteur 11 du type roue dentée-vis sans fin, équipé d'un moteur hydraulique.

Le servomoteur 11 est associé à une boucle d'asservissement qui comporte un capteur de déplacement angulaire, de tout type connu, par exemple un capteur analogique du type synchro ou potentiomètre, ou un capteur numérique à impulsions. Ce capteur mesure l'angle de rotation $\beta$ du bâti 8 autour de l'axe Y Y1. La boucle d'asservissement comporte des moyens de comparaison qui comparent la valeur mesurée de l'angle $\beta$ à une valeur de consigne $\beta o$ et qui commandent le servomoteur dans le sens qui ramène à zéro l'écart $\beta$-$\beta o$.

En variante, les deux tourillons 9a, 9b peuvent être entraînés chacun par un servomoteur associé à une boucle d'asservissement et les deux boucles reçoivent la même valeur de consigne $\beta o$.

Le bâti basculant 8 comporte, en outre, une poutre transversale mobile 8d qui est parallèle à la traverse 8a.

Sur la poutre 8d sont fixées les tiges 12 de deux vérins hydrauliques 13 qui sont logés à l'intérieur des branches latérales 8b, 8c qui sont creuses. La poutre mobile 8d porte deux manchons de guidage 13a, 13b qui s'engagent à l'intérieur des branches creuses 8b et 8c et qui supportent la poutre.

On voit sur la figure 2 que la poutre 8d vient fermer l'ouverture du cadre 8a, 8b, 8c.

Le bâti positionneur comporte, en outre, deux cônes de centrage 14a, 14b qui s'engagent dans les extrémités du tube principal 1 comme le montre la figure 2. L'un des cônes 14a est supporté par un bout d'arbre 15 qui est lui-même monté sur des roulements 16 portés par la traverse 8a. Ces roulements peuvent être remplacés par des paliers. Le bout d'arbre 15 porte un pignon d'entraînement 17 qui coopère avec un servomoteur d'entraînement 18.

Le servomoteur 18 est du même type que le servomoteur 11 et il est également associé à une boucle d'asservissement comportant un capteur de déplacement angulaire qui mesure l'angle $\alpha$ de pivotement du cône 14a autour de l'axe longitudinal X X1 de l'arbre 15. Par construction, l'axe longitudinal X X1 est perpendiculaire à l'axe transversal Y Y1 et situé sensiblement dans le plan de symétrie longitudinale du bâti 8.

La boucle d'asservissement maintient l'angle $\alpha$ égal à une valeur de consigne $\alpha o$.

Le cône 14b est porté par un bout d'arbre 19 qui est supporté par des roulements 20 portés par la poutre 8d de sorte que le cône 14b et l'arbre 19 peuvent pivoter librement. Les arbres 15 et 19 et les cônes 14a, 14b sont alignés suivant l'axe X X1.

On voit sur la figure 2 que les vérins 13 permettent de déplacer la poutre 8d parallèlement à l'axe longitudinal X X1 pour dégager la pièce à souder ou pour maintenir le cône 14b engagé dans une extrémité du tube principal 1.

Les chambres des cylindres des vérins 13 situées du côté de la poutre 8d, sont connectées sur un accumulateur hydropneumatique 22, qui fait fonction de ressort et qui exerce sur les tiges 12 une traction constante qui maintient le tube 1 serré entre les deux cônes 14a, 14b tout en autorisant les dilatations.

Le réservoir hydropneumatique peut être remplacé par des moyens élastiques équivalents.

Dans certains cas, la friction entre les cônes 14a, 14b et les extrémités du tube 1 peut suffire à ce que le mouvement de rotation dû au servomoteur 18 entraîne le tube 1 et le cône 14b en rotation autour de l'axe X X1.

Afin d'éviter tout risque de glissement, le cône 14a porte avantageusement un doigt d'entraînement 21a et on fixe à la périphérie du tube 1 un organe d'entraînement 21b ayant la forme d'un levier ou d'une fourche. Le doigt 21a s'appuie sur l'organe 21b et entraîne le tube 1 en rotation.

Avant de commencer une soudure d'une dérivation 2 on chanfreine l'extrémité du bout de tube 2 selon une loi déterminée puis on positionne la dérivation 2 sur le tube 1 et on la fixe sur celui-ci par exemple par des points de soudure.

On place ensuite le tube 1 portant la dérivation 2 entre les mors coniques 14a et 14b.

Le diamètre interne du tube 1 détermine exactement la position de l'extrémité du tube sur le mors conique 14a et l'ordinateur peut calculer cette position qui peut servir d'origine aux coordonnées longitudinales. La forme conique des mors centre le tube 1 sur l'axe X X1.

Bien entendu, on peut utiliser plusieurs jeux de cônes de centrage selon les diamètres des tubes principaux.

La figure 1 représente en élévation le portique roulant 4 qui porte l'ensemble mobile de soudage ou de découpage 5.

Le portique 4 comporte une structure rigide qui enjambe le bâti positionneur. Cette structure est composée de montants verticaux 23a, 23b, dont les bases sont reliées entre elles par des poutres longitudinales 24 et dont les sommets sont reliés entre eux par des poutres et des entretoises formant un cadre rigide. La hauteur du portique et la hauteur de l'axe Y Y1 par rapport au sol sont telles que le bâti basculant 8 portant un ensemble à souder puisse pivoter librement autour de l'axe Y Y1 d'un angle $\beta = \pm 90°$, environ de part et d'autre de la position dans laquelle le tube 1 est horizontal.

Le portique 4 est monté sur des roues ou galets 25 qui roulent sur un chemin de roulement longitudinal constitué par des rails ou des glissières fixés au sol, ce qui permet de déplacer le portique pour dégager le bâti positionneur, afin d'effectuer les manutentions pour la mise en place de la pièce à souder sur le bâti et pour l'enlèvement après soudage. Des butées permettent de fixer avec précision la position relative du portique 4 par rapport au bâti.

Un dispositif de verrouillage 26, par exemple des vérins à vis ou des broches ou tout autre moyen équivalent, permettent de bloquer le portique sur le chemin de roulement dans sa position de travail.

Le portique 4 porte à la partie supérieure un chemin de roulement longitudinal 27 constitué par des poutres, des rails, des glissières etc..., horizontaux et parallèles au plan vertical passant par l'axe X X1.

L'ensemble mobile de soudage ou de découpage 5 comporte un premier chariot 28 équipé de galets ou roues 29 qui roulent sur le chemin de roulement 27.

Le chariot 28 est équipé d'un servomoteur qui permet de le déplacer longitudinalement sur le chemin de roulement 27.

Par exemple, le chariot 28 est solidaire d'un écrou qui est monté sur une vis micrométrique 30 parallèle aux rails 27 et cette vis est entraînée en rotation par un groupe motoréducteur 31. Un capteur analogique ou numérique mesure les déplacements linéaires x du chariot 28 et transmet la mesure à une boucle d'asservissement qui la compare à une valeur de consigne xo et qui commande automatiquement le servomoteur pour annuler l'écart x — xo. Le dispositif à vis micrométrique et écrou peut être remplacé par un vérin à déplacement linéaire ou par tout autre servomoteur équivalent.

Le chariot 28 porte un chemin de roulement horizontal transversal parallèle à l'axe Y Y1, qui est constitué par exemple par deux glissières 32a, 32b.

L'ensemble mobile comporte un deuxième chariot 33 équipé de galets 34 qui roulent dans les glissières 32a et 32b.

Le chariot 33 est entraîné en translation parallèle à l'axe Y Y1 par un servomoteur 35 identique ou non au servomoteur 31 et comportant également une boucle d'asservissement qui reçoit une valeur de consigne yo et qui maintient le positionnement y du chariot 33 mesurée selon un axe Y Y1 égal à la valeur de consigne.

Le chariot 33 porte un chemin de roulement vertical constitué par exemple par un ou plusieurs rails verticaux 36. L'ensemble mobile comporte un troisième chariot 37 équipé de roues ou galets 38 qui roulent le long des rails verticaux 36. Le chariot 37 est déplacé verticalement par un servomoteur 39 porté par le chariot 33 qui est du même type ou non que les servomoteurs 31 et 35 et qui comporte également une boucle d'asservissement qui maintient la hauteur z de la ou des têtes de soudage ou de découpage 40 égales à une valeur de consigne zo.

Le chariot 37 porte une ou plusieurs têtes de soudage ou de découpage 40 de tout type connu.

Les têtes de soudage sont fixées au chariot 37, de telle sorte que les électrodes sont verticales et restent verticales pendant tous les déplacements.

Chaque tête de soudage ou de découpage comporte les dispositifs habituels d'entraînement des électrodes, d'un flux gazeux ou pulvérulent, d'alimentation en courant électrique etc...

L'objectif de la présente invention est d'orienter la pièce à souder en même temps que l'on déplace la ou les têtes de soudage ou de découpage, de telle sorte que les électrodes de soudage ou de découpage restent verticales et soient dans le plan bissecteur du chanfrein de soudure.

Lorsque le chariot 37 porte plusieurs têtes de soudage qui effectuent simultanément plusieurs cordons de soudure superposés, les plans bissecteurs correspondant aux têtes successives ne sont pas confondus.

Dans ce cas, les têtes de soudage peuvent être reliées au chariot 37 par un support rotatif autour d'un axe vertical qui permet d'optimiser la position relative d'une tête par rapport à l'autre, en fonction de leur distance et de la forme du chanfrein afin que chaque électrode soit sensiblement dans le plan bissecteur du chanfrein situé à l'aplomb de celle-ci.

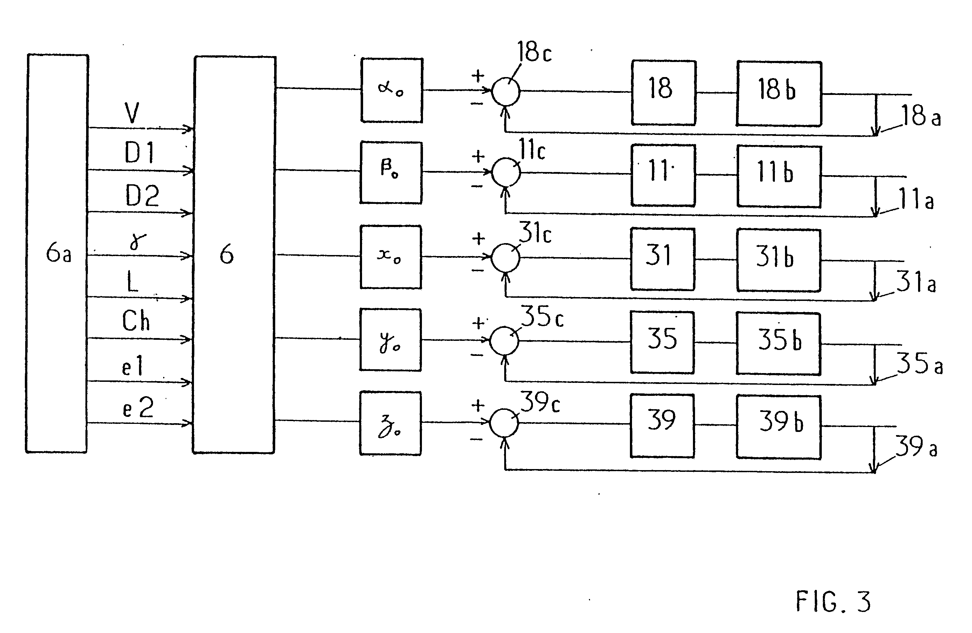

La machine comporte un ordinateur 6 (figure 3) qui est associé à des organes d'entrée de données, par exemple à un pupitre 6a, qui permet d'introduire dans la mémoire de l'unité de calcul, les paramètres de la soudure à effectuer.

Ces paramètres sont le diamètre D1 du tube principal 1, le diamètre D2 au bout de tube en dérivation 2, l'angle Y que fait l'axe de la dérivation avec l'axe X X1 du tube principal, la distance L entre l'extrémité du tube principal et le point de la dérivation le plus près de celle-ci, les épaisseurs e1 et e2 des deux tubes et un ou plusieurs paramètres qui caractérisent la loi de variation du chanfrein. On introduit également dans la mémoire la vitesse de soudage V souhaitée. Dans le cas où les axes des deux tubes ne sont pas concourants on introduit également la distance entre ces axes.

L'ordinateur est programmé pour calculer, à partir de ces données, cinq variables qui sont transmises comme valeurs de consigne aux cinq comparateurs des cinq boucles d'asservissement qui viennent d'être décrites.

Le programme est établi pour que les électrodes se déplacent en suivant le chanfrein de soudure à la vitesse de soudure voulue et pour que, en même temps, l'ensemble à souder soit orienté par pivotement autour des axes X X1 et Y Y1, de telle sorte que le plan bissecteur du chanfrein situé au-dessous de chaque électrode, soit sensiblement vertical afin que l'électrode soit située sensiblement dans ce plan.

Dans le cas où la tête de soudure comporte deux électrodes décalées qui soudent simultanément, on a vu précédemment qu'elles peuvent être montées sur un support rotatif autour d'un axe vertical qui permet d'optimiser la position relative des deux électrodes l'une par rapport à l'autre.

La figure 3 montre les cinq sorties du calculateur 6 et les cinq valeurs de consigne qui sont émises périodiquement par celui-ci.

La première ligne de sortie donne la valeur de consigne de l'angle $\alpha$o de pivotement du bâti basculant 8 autour de l'axe X X1.

On a représenté sur la première ligne le servomoteur 18 qui entraîne le bâti 8 et une boucle d'asservissement 18a comportant un capteur 18b qui mesure l'angle de rotation $\alpha$ et qui transmet la valeur mesurée à un comparateur 18c qui compare celle-ci à la valeur de consigne $\alpha$o émise par l'ordinateur.

Les autres lignes de la figure 3 représentent respectivement les valeurs de consigne βo, xo, yo, zo émises par l'ordinateur et les boucles d'asservissement 11a, 31a, 35a, 39a associées à chacun d'eux comportant les capteurs 11b, 31b, 35b, 39b et les comparateurs 11c, 31c, 35c, 39c.

On rappelle que β est l'angle de pivotement autour de l'axe Y Y1 et x, y et z sont les déplacements de l'ensemble mobile suivant trois axes trirectangulaires, l'axe y y1 étant, de préférence, parallèle à l'axe Y Y1, l'axe x x1 étant un axe horizontal, de préférence longitudinal et z z1 étant obligatoirement vertical.

Au début d'une opération de soudage automatique, la pièce à souder et l'ensemble mobile sont placés manuellement dans une position déterminée qui est prise en compte dans le programme, par exemple dans la position représentée sur la figure 1 ou l'électrode 40 se trouve placée, au-dessus du point A de la soudure, qui est situé à l'intersection des génératrices qui sont dans le plan de symétrie longitudinal et qui font entre elles un angle obtus.

La pièce à souder est positionnée de telle sorte que le plan bissecteur du chanfrein de soudure au point A soit sensiblement vertical.

A partir de cette position initiale, l'ordinateur pilote les opérations et la soudure est effectuée de façon automatique.

Toutefois, il est prévu que chacune des valeurs de consigne peut être réglée manuellement par un opérateur, à partir d'un pupitre de commande, ce qui permet de commander manuellement toutes les opérations d'approche de la tête de soudage et d'orientation initiale de la pièce à souder.

Les manœuvres du portique roulant pour dégager le bâti sont commandées depuis le pupitre.

On a décrit une machine de soudage automatique. Il est précisé que les têtes de soudage peuvent être remplacées par des moyens de découpage, par exemple par un chalumeau oxycoupeur et dans ce cas la machine décrite peut découper automatiquement un tube.

Pour découper l'extrémité d'un tube 2 qui doit être monté en dérivation, on équipe le cône 14a, qui est entraîné en rotation, d'un mors qui saisit l'autre extrémité du tube et qui le maintient en porte à faux sous la tête de découpage.

L'avantage de cette solution réside dans le fait que les même paramètres géométriques peuvent être utilisés pour effectuer successivement le découpage puis le soudage, ce qui réduit les opérations d'ajustement des profils à souder et assure une qualité améliorée de la jonction.

**Revendications**

1. Procédé pour souder automatiquement la jonction entre un tube principal (1) et un ou plusieurs tubes secondaires (2) montés en dérivation, comportant la suite des opérations suivantes :

— on découpe et on chanfreine préalablement une extrémité desdits tubes secondaires (2) et éventuellement ledit tube principal (1) suivant une ligne destinée à constituer un noeud de jonction soudé ;

— on fixe par points lesdits tubes secondaires (2) en dérivation sur ledit tube principal ;

— on place ledit tube principal (1) portant lesdits tubes secondaires sur un support positionneur (3) qui permet de le faire pivoter autour d'un premier axe (X X1) confondu avec l'axe dudit tube principal et autour d'un deuxième axe horizontal (Y Y1) perpendiculaire audit premier axe, au moyen de deux servomoteurs (11, 18) équipés chacun d'une boucle d'asservissement ;

— on amène au-dessus dudit support positionneur (3) un portique roulant (4) portant un ensemble mobile de soudage (5) monté sur trois chariots (28, 33, 35), qui permettent de déplacer respectivement les têtes de soudage selon trois axes (x x1, y y1, z z1) trirectangulaires, dont l'un est vertical au moyen de trois servomoteurs (31, 35, 39) équipés chacun d'une boucle d'asservissement ;

— on entre les données qui définissent ledit tube principal, chacun des tubes secondaires et les positions relatives de ceux-ci dans un calculateur qui calcule, pour chaque point de la courbe d'intersection, trois variables (xo, yo, zo) correspondant aux coordonnées mesurées selon les trois axes de déplacement desdits chariots et deux variables (αo,βo) qui correspondent à l'orientation dudit tube principal autour des deux axes de pivotement (X X1, Y Y1) et qui transmet ces cinq valeurs de consigne auxdits servomoteurs qui déplacent automatiquement lesdits chariots en maintenant lesdites tête de soudage verticales et qui positionnent automatiquement ledit tube principal pour maintenir les têtes de soudage dans le plan bissecteur du chanfrein de soudure.

2. Procédé pour découper un tube principal (1), suivant une ligne destinée à constituer par la suite un nœud de jonction avec un ou plusieurs autres tubes secondaires et comportant la suite des opérations suivantes :

— on place ledit tube principal (1) sur un support positionneur (3) qui permet de le faire pivoter autour d'un premier axe (X X1) confondu avec l'axe dudit tube et autour d'un deuxième axe horizontal (Y Y1) perpendiculaire audit premier axe au moyen de deux servomoteurs (11, 18) équipés chacun d'une boucle d'asservissement ;

— on amène au-dessus dudit support positionneur (3), un portique roulant (4) portant un ensemble mobile de découpage (5) monté sur trois chariots (28, 33, 35) qui permettent de déplacer les têtes de découpage selon trois axes (x x1, y y1, z z1) trirectangulaires, dont l'un est vertical, au moyen de trois servomoteurs (31, 35, 39) équipés chacun d'une boucle d'asservissement ;

— on entre les données qui définissent le tube principal et le ou les tubes secondaires ainsi que les positions relatives de ceux-ci dans un calculateur qui calcule la courbe intersection du tube principal avec le ou les tubes secondaires, les coordonnées (xo, yo, zo) des points de cette courbe étant mesurées selon les trois axes de déplacement desdits chariots et deux variables (αo, βo) qui correspondant à l'orientation dudit tube principal autour des deux axes de pivotement (X X1, Y Y1), le calculateur transmettant ces cinq valeurs de consigne respectivement auxdits servomoteurs qui déplacent automatiquement lesdits chariots et qui positionnent automatiquement ledit tube principal pendant l'opération de découpage.

3. Machine à souder ou à découper pouvant être utilisée pour souder automatiquement un noeud de jonction entre un tube principal (1) et un ou plusieurs tubes secondaires (2) ou pour découper automatiquement un tube (1, 2) suivant une ligne destinée à constituer par la suite un noeud de jonction avec un ou plusieurs autres tubes ou, pour découper un noeud de jonction existant entre un tube principal et un ou plusieurs tubes secondaires comportant, en combinaison :

— un support positionneur (3) qui porte le tube principal à souder ou le tube à découper, de telle sorte que ce tube puisse pivoter autour d'un premier axe (X X1) confondu avec l'axe dudit tube et autour d'un deuxième axe horizontal (Y Y1) perpendiculaire audit premier axe et qui comporte deux servomoteurs (11, 18) équipés chacun d'une boucle d'asservissement pour entraîner automatiquement ledit tube en rotation autour desdits axes ;

— un portique roulant (4) qui comporte des moyens de verrouillage en position fixe au-dessus dudit support et qui porte un ensemble mobile de soudage ou de découpage automatique (5) monté sur trois chariots (28, 33, 37) qui peuvent se déplacer respectivement suivant trois axes trirectangulaires (x x1, y y1, z z1) dont l'un (z z1) est vertical et chacun des chariots est entraîné en translation par un servomoteur (31, 35, 39) associé à une boucle d'asservissement ;

— et un calculateur (6) dans lequel on introduit, avant de commencer une soudure, les données qui définissent les paramètres géométriques de la jonction de la soudure où de la découpe, lequel calculateur calculant pour chaque point de la jonction ou de la découpe, trois coordonnées (xo, yo, zo) correspondant aux coordonnées dudit point par rapport aux trois axes (x x1, y y1, z z1) de déplacement desdits chariots et deux angles (αo, βo) correspondant à l'orientation de la pièce à souder autour des deux axes (X X1, Y Y1), le calculateur transmet lesdites variables comme valeurs de consigne respectivement auxdites cinq boucles d'asservissement.

4. Machine selon la revendication 3, caractérisée en ce que ledit support (3) positionneur de tubes comporte un bâti fixe (3a, 3b, 3c, 3d), un bâti basculant (8) qui est articulé audit bâti fixe autour d'un axe horizontal (Y Y1) et qui est entraîné en rotation autour dudit axe par un servomoteur (11) associé à une boucle d'asservissement (11a), deux cônes de centrage coaxiaux (14a, 14b) qui sont engagés dans les extrémités dudit tube principal (1) et qui définissent un axe (X X1) confondu avec l'axe dudit tube principal, lesquels cônes sont montés rotatifs autour de leur axe (X X1) par rapport audit bâti basculant et sont entraînés en rotation par un servomoteur (18) associé à une boucle d'asservissement (18a).

5. Machine selon la revendication 4, caractérisée en ce que ledit bâti basculant (8) comporte un cadre rectangulaire composé d'une traverse (8a) et de deux branches latérales (8b, 8c) formant une pièce en forme de U ouvert et une poutre transversale mobile (8d) et ladite traverse et ladite poutre portent en leur milieu lesdits cônes de centrage et ladite poutre mobile est associée à des moyens de rappel élastique qui maintiennent lesdits cônes engagés dans les extrémités du tube principal.

6. Machine selon la revendication 5, caractérisée en ce que lesdites branches latérales (8b, 8c) sont creuses et ladite poutre mobile (8d) est montée sur deux vérins (13) qui sont logés dans lesdites branches latérales et chacun desdits vérins est connecté sur un accumulateur (22) hydropneumatique, de telle sorte qu'il rappelle élastiquement ladite poutre mobile.

7. Machine selon la revendication 6, caractérisée en ce que chacun desdits cônes de centragè (14a, 14b) est monté sur un bout d'arbre (15, 19) qui est supporté par des paliers (16, 20) placés respectivement au milieu de ladite traverse (8a) et de ladite poutre mobile (8d) et l'un des bouts d'arbre (15) porte un pignon (17) qui est entraîné en rotation par ledit servomoteur (18).

8. Machine selon la revendication 7, caractérisée en ce que ledit cône (14a) qui est entraîné en rotation porte à sa périphérie un doigt d'entraînement (21a) qui coopère avec un organe d'entraînement (21b) qui est fixé à la périphérie dudit tube principal (1).

9. Machine selon l'une quelconque des revendications 3 à 8, caractérisée en ce que ledit portique (4) est monté sur des galets (25) qui se déplacent sur un chemin de roulement qui se prolonge au delà dudit support de positionnement ; de telle sorte qu'il est possible de dégager entièrement ledit support de positionnement pour effectuer les manutentions de mise en place des pièces à souder et d'enlèvement de celles-ci.

10. Machine selon la revendication 9, caractérisée en ce qui lesdites têtes de soudage ou découpage sont fixées en position verticale sur l'une des trois chariots et se déplacent en restant constamment verticales.

11. Machine selon l'une quelconque des revendications 3 à 10, caractérisée en ce que l'un desdits chariots (33) se déplace suivant un axe horizontal (y y1) qui est parallèle au deuxième axe de rotation (Y Y1) et un autre desdits chariots (28) se déplace suivant un axe horizontal (x x1) qui est contenu dans le plan vertical passant par le premier axe de rotation (X X1).

**Claims**

1. A process for automatically welding the junction point between a main pipe (1) and one or several secondary branch pipes (2) shunt connected thereto, comprising the following steps of :

— cutting and bevelling beforehand an end of said secondary branch pipes (2) and optionally said main pipe (1) following a line designed to constitute a welded junction point ;

— shunt securing by points said secondary pipes (2) to said main pipe ;

— placing the main pipe (1) bearing the said secondary branch pipes (2), on a positioning support (3) which allows the assembly to pivot about a first axis (X X1) merged with the axis of the main pipe and about a second horizontal axis (Y Y1) perpendicular to the first axis, by means of two servomotors (11, 18) each equipped with a control loop ;

— bringing above said positioning support (3) a travelling gantry crane (4) bearing a mobile welding assembly (5) mounted on three carriages (28, 33, 35) which make it possible to displace the welding heads respectively along three trirectangular axes (x x1, y y1, z z1), of which one is vertical, by means of three servomotors (31, 35, 39) each equipped with a control loop ;

— entering the data which define the said main pipe, each secondary branch pipe and the relative positions thereof into a computer which calculates, for each point of the curve of intersection, three variables (xo, yo, zo) corresponding to the coordinates measured along the three axes of displacement of said carriages and two variables (αo, βo) which correspond to the orientation of said main pipe about the two pivot axes (X X1, Y Y1) and which transmits these five reference values to said servomotors which automatically displace said carriages whilst maintaining said heads vertical and which automatically position said main tube to maintain the welding heads in the bisecting plane of the welding bevel.

2. Process for cutting a main pipe (1) following a line designed to constitute subsequently a junction point with one or several other secondary pipes and comprising the following steps of :

— placing said main pipe (1), on a positioning support (3) which allows the assembly to pivot about a first axis (X X1) merged with the axis of the main pipe and about a second horizontal axis (Y Y1) perpendicular to the first axis, by means of two servomotors (11, 18) each equipped with a control loop ;

— bringing above said positioning support (3) a travelling gantry crane (4) bearing a mobile cutting assembly (5) mounted on three carriages (28, 33, 35) which make it possible to displace the cutting heads respectively along three trirectangular axes (x x1, y y1, z z1) of which one is vertical, by means of three servomotors (31, 35, 39) each equipped with a control loop ;

— entering the data which define the main pipe and the secondary pipe or pipes and the relative positions thereof into a computer which calculates the curve of intersection of the main pipe with the secondary pipe or pipes, three variables corresponding to the coordinates (xo, yo, zo) of the points of said curve being measured along the three axes of displacement of said carriages and

two variables (αo, βo) corresponding to the orientation of said main pipe about the two pivot axes (X X1, Y Y1), the computer transmitting these five reference values respectively to said servomotors which automatically displace said carriages and which automatically position said main tube during the cutting operation.

3. Welding or cutting machine adapted to be used for automatically welding a junction point between a main pipe (1) and one or several secondary pipes (2) or for automatically cutting a tube (1, 2) following a line designed to constitute subsequently a junction point with one or several other pipes or for cutting a junction point existing between a main pipe and one or several secondary pipes comprising, in combination :

— a positioning support (3) which bears the main pipe to be welded or cut, so that the latter can pivot about a first axis (X X1) merged with the axis of the main pipe and about a second horizontal axis (Y Y1), perpendicular to the first axis, and which comprises two servomotors (11, 18) each equipped with a control loop for automatically rotating the pipe to be welded about said axes, ;

— a travelling gantry crane (4) which comprises means for locking in fixed position above said support and which bears a mobile, automatic welding or cutting assembly (5) mounted on three carriages (28, 33, 37) which may move respectively along three trirectangular axes (x x1, y y1, z z1) of which one is vertical and each of the carriages is driven in translation by a servomotor (31, 35, 39) associated with a control loop ;

— and a computer (6) into which are introduced, before beginning a weld, the data which define the geometrical parameters of the junction of the weld or of the cutting which computer calculates for each point of the junction or of the cutting three coordinates (xo, yo, zo) corresponding to the coordinates of said point with respect to the three axes (x x1, y y1, z z1) of displacement of said carriages and two angles (αo, βo) corresponding to the orientation of the piece to be welded about the two axes (X X1, Y Y1), which computer transmits said variables as reference values respectively to said five control loops.

4. The machine according to claim 3, characterized in that said pipe positioning support (3) comprises a fixed frame (3a, 3b, 3c, 3d), a pivoting frame (8) which is articulated on said fixed frame about a horizontal axis (Y Y1) and which is driven in rotation about said axis by a servomotor (11) associated with a control loop (11a), two coaxial centering cones (14a, 14b) which are engaged in the ends of said main pipe (1) and which define an axis (X X1) merged with the axis of said main pipe, which cones are mounted to rotate about their axis (X X1) with respect to said pivoting frame and are driven in rotation by a servomotor (18) associated with a control loop (18a).

5. The machine according to claim 4, characterized in that said pivoting frame (8) comprises a rectangular frame composed of a crosspiece (8a) and of two lateral arms (8b, 8c) forming a piece in the form of an open U and a mobile transverse beam (8d) and said crosspiece and said beam bear said centering cones at their centre and said mobile beam is associated with elastic return means which maintain said cones engaged in the ends of the main pipe.

6. The machine according to claim 5, characterized in that said lateral arms (8b, 8c) are hollow and said mobile beam (8d) is mounted on two jacks (13) which are housed in said lateral arms and each of said jacks is connected on a hydropneumatic accumulator (22) so that it elastically returns said mobile beam.

7. The machine according to claim 6, characterized in that each of said centering cones (14a, 14b) is mounted on a shaft end (15, 19) which is supported by bearings (16, 20) placed respectively at the centre of said crosspiece (8a) and of said mobile beam (8d) and one of the shaft ends (15) bears a pinion (17) which is driven in rotation by said servomotor (18).

8. The machine according to claim 7, characterized in that said cone (14a) which is driven in rotation bears on its periphery a drive finger (12a) which cooperates with a drive member (21b) fixed on the periphery of sàid main pipe (1).

9. The machine according to any one of claims 3 to 8, characterized in that said travelling gantry crane (4) is mounted on rollers (25) which move over a track which extends beyond said positioning support, with the result that it is possible to disengage said positioning support entirely in order to position the pieces to be welded and to remove them.

10. The machine according to claim 9, characterized in that said welding or cutting heads are fixed in vertical position on one of the three carriages and move whilst constantly remaining vertical.

11. The machine according to any one of claims 3 to 10, characterized in that one of said carriages (33) moves along a horizontal axis (y y1) which is parallel to the second axis of rotation (Y Y1) and another of said carriages (28) moves along a horizontal axis (x x1) which is contained in the vertical plane passing through the first axis of rotation (X X1).

**Patentansprüche**

1. Verfahren zum automatischen Verschweißen der Verbindungsstelle zwischen einem Hauptrohr (1) und einem oder mehreren, davon abzweigenden Nebenrohren (2), welches die folgenden Arbeitsgänge nacheinander umfaßt :

— man schneidet zuerst ein Ende der Nebenrohre (2) und gegebenenfalls das Hauptrohr (1) entsprechend einer zur Bildung eines Schweißverbindungsknotens bestimmten Linie zu und fast es ab,

— man punktet die Nebenrohre (2) in Abzweigung vom Hauptrohr an ;

— man plaziert das die Nebenrohre tragende Hauptrohr (1) auf einen Positionsträger (3), der es um eine erste, mit der Achse des Hauptrohrs zusammenfallende Achse (X X1) und um eine zweite, horizontale Achse (Y Y1) senkrecht zur ersten Achse mittels zweier Servomotoren (11, 18), die jeweils mit einem Regelkreis ausgestattet sind, verschwenken läßt ;

— man bringt über den Positionsträger (3) einen fahrbaren Portalkran (4), der eine mobile Schweißgruppe (5) trägt, welche auf drei Schlitten (28, 33, 35) gelagert ist, die die Verschiebung der Schweißköpfe entlang dreier zueinander im rechten Winkel stehender Achsen (x x1, y y1, z z1), von denen eine vertikal verläuft, mittels dreier Servomotoren (31, 35, 39), die jeweils mit einem Regelkreis ausgestattet sind, gestatten ;

— man gibt die Daten, die das Hauptrohr, jedes der Nebenrohre und die Relativpositionen derselben definieren, einem Rechner ein, der für jeden Punkt der Schnittkurve drei Variable (xo, yo, zo) entsprechend den gemäß den drei Verschiebeachsen der Schlitten gemessenen Koordinaten und zwei der Ausrichtung des Hauptrohrs um die beiden Schwenkachsen (X X1, Y Y1) entsprechende Variable (αo, βo) berechnet und diese fünf Sollwerte an die Servomotoren übermittelt, die die Schlitten unter Vertikalhalten der Schweißköpfe automatisch verschieben und das Hauptrohr automatisch positionieren, um die Schweißköpfe in der Symmetriefläche der Schweißabfasung zu halten.

2. Verfahren zum Zuschneiden eines Hauptrohres (1) entsprechend einer zur Bildung eines Verbindungsknotens zu einem oder mehreren anderen Nebenrohren im Anschluß daran bestimmten Linie, welches die folgenden Arbeitsgänge nacheinander umfaßt :

— man plaziert das Hauptrohr (1) auf einen Positionsträger (3), der ein Verschwenken desselben um eine erste, mit der Achse des Rohres zusammenfallende Achse (X X1) und um eine zweite, horizontale Achse (Y Y1) senkrecht zur ersten Achse mittels zweier Servomotoren (11, 18), die jeweils mit einem Regelkreis ausgestattet sind, gestattet ;

— man bringt über den Positionsträger (3) einen fahrbaren Portalkran (4), der eine mobile Schneidgruppe (5) trägt, welche auf drei Schlitten (28, 33, 35) gelagert ist, die die Verschiebung der Schneidköpfe entlang dreier zueinander im rechten Winkel stehender Achsen (x x1, y y1, z z1), von denen eine vertikal verläuft, mittels dreier Servomotoren (31, 35, 39), die jeweils mit einem Regelkreis ausgestattet sind, gestatten ;

— man gibt die Daten, die das Hauptrohr und das oder die Nebenrohr(e) sowie die Relativpositionen derselben definieren, einem Rechner ein, der die Schnittkurve des Hauptrohres mit dem oder den Nebenrohr(en) berechnet, wobei die Koordinaten (xo, yo, zo) der Punkte dieser Kurve entsprechend den drei Verschiebeachsen der Schlitten und zweier der Ausrichtung des Hauptrohres um die beiden Schwenkachsen (X X1, Y Y1) entsprechender Variabler (αo, βo) gemessen werden, welcher Rechner diese fünf Sollwerte an die jeweiligen Servomotoren übermittelt, welche die Schlitten automatisch verschieben und das Hauptrohr während des Schneidvorganges automatisch positionieren.

3. Schweiß- oder Zuschneidemaschine zur Verwendung beim automatischen Verschweißen eines Verbindungsknotens zwischen einem Hauptrohr (1) und einem oder mehreren Nebenrohr(en) (2) bzw. zum automatischen Zuschneiden eines Rohres (1, 2) entsprechend einer zur Bildung eines Verbindungsknotens zu einem oder mehreren anderen Rohren im Anschluß daran bestimmten Linie bzw. zum Zuschneiden eines zwischen einem Hauptrohr und einem oder mehreren Nebenrohren bestehenden Verbindungsknotens, umfassend in Kombination :

— einen Positionsträger (3), der das zu verschweißende Hauptrohr bzw. das zuzuschneidende Rohr derart trägt, daß dieses Rohr um eine erste, mit der Achse des Rohres zusammenfallende Achse (X X1) und um eine zweite, horizontale Achse (Y Y1) senkrecht zur ersten Achse schwenken kann, und welcher zwei jeweils mit einem Regelkreis ausgestattete Servomotoren (11, 18) zum automatischen Rotationsantrieb des Rohres um diese Achsen umfaßt ;

— einen fahrbaren Portalkran (4), welcher Mittel zum Verriegeln in feststehender Position oberhalb des Trägers umfaßt und eine mobile automatische Schweiß- oder Zuschneidgruppe (5) trägt, die auf drei Schlitten (28, 33, 37) gelagert ist, die entlang dreier zueinander im rechten Winkel stehender Achsen (x x1, y y1, z z1), von denen eine (z z1) vertikal verläuft, verschiebbar sind, wobei jeder der Schlitten durch einen mit einem Regelkreis verbundenen Servomotor (31, 35, 39) in Bewegung versetzt wird ;

— und einen Rechner (6), welchem man vor Beginn des Schweißens die Daten eingibt, die die geometrischen Parameter der Schweißverbindungsstelle oder des Zuschnitts definieren, welcher Rechner für jeden Punkt der Verbindung oder des Zuschnitts drei Koordinaten (xo, yo, zo) entsprechend den Koordinaten dieses Punktes in bezug auf die drei Verschiebeachsen (x x1, y y1, z z1) der Schlitten und zwei Winkel ($\alpha$o, $\beta$o) entsprechend der Ausrichtung des zu schweißenden Stücks um die beiden Achsen (X X1, Y Y1) berechnet, wobei der Rechner diese Variablen als Sollwerte an die jeweiligen fünf Regelkreise übermittelt.

4. Maschine nach Anspruch 3, dadurch gekennzeichnet, daß der Positionsträger (3) ein stationäres Gestell (3a, 3b, 3c, 3d), ein am stationären Gestell um eine horizontale Achse (Y Y1) angelenktes und mittels eines an einen Regelkreis (11a) angeschlossenen Servomotors (11) um diese Achse rotationsbetriebenes Schwenkgerüst (8) und zwei koaxiale, in den Enden des Hauptrohres (1) eingesetzte und eine mit der Achse des Hauptrohres zusammenfallende Achse (X X1) definierende Zentrierkegel (14a, 14b) umfaßt, welche Kegel drehbar um ihre Achse (X X1) in bezug auf das Schwenkgerüst gelagert und durch einen an einen Regelkreis (18a) angeschlossenen Servomotor (18) rotationsbetrieben sind.

5. Maschine nach Anspruch 4, dadurch gekennzeichnet, daß das Schwenkgerüst (8) einen rechteckigen Rahmen umfaßt, der aus einer Traverse (8a) und zwei ein offenes U-förmiges Stück bildenden Seitenarmen (8b, 8c) zusammengesetzt ist, und einen mobilen Querträger (8d) umfaßt, und daß die Traverse und der Träger in ihrer Mitte die Zentrierkegel tragen und der mobile Träger mit elastischen Rückholmittel verbunden ist, die die Kegel in den Enden des Hauptrohres eingesetzt halten.

6. Maschine nach Anspruch 5, dadurch gekennzeichnet, daß die Seitenarme (8b, 8c) hohl sind und der mobile Träger (8d) auf zwei in den Seitenarmen befindlichen Stelltrieben (13) montiert ist, und daß jeder der Stelltriebe an einem hydropneumatischen Akkumulator (22) angeschlossen ist, sodaß er den mobilen Träger elastisch zurückholt.

7. Maschine nach Anspruch 6, dadurch gekennzeichnet, daß jeder der Zentrierkegel (14a, 14b) auf einem Wellenstumpf (15, 19) gelagert ist, der von in der Mitte der Traverse (8a) bzw. des mobilen Trägers (8d) angeordneten Lagern (16, 20) gestützt ist, und daß einer der Wellenstümpfe (15) ein Ritzel (17) trägt, das vom Servomotor (18) rotationsbetrieben ist.

8. Maschine nach Anspruch 7, dadurch gekennzeichnet, daß der Kegel (14a), der rotationsbetrieben ist, an seinem Umfang einen Antriebsfinger (21a) trägt, welcher mit einem am Umfang des Hauptrohres (1) befestigten Antriebsorgan (21b) zusammenwirkt.

9. Maschine nach einem der Ansprüche 3 bis 8, dadurch gekennzeichnet, daß der Portalkran (4) auf Rollen (25) gelagert ist, die sich auf einer über den Positionsträger hinausgehenden Rollbahn bewegen, sodaß es möglich ist, den Positionsträger zwecks Durchführung der Arbeiten zum Positionieren der zu verschweißenden Stücke und zum Entfernen derselben vollkommen zu entfernen.

10. Maschine nach Anspruch 9, dadurch gekennzeichnet, daß die Schweiß- oder Schneidköpfe in vertikaler Position auf einem der drei Schlitten befestigt sind und sich bewegen, wobei sie konstant vertikal bleiben.

11. Maschine nach einem der Ansprüche 3 bis 10, dadurch gekennzeichnet, daß sich einer der Schlitten (33) entlang einer horizontalen Achse (y y1), die parallel zur zweiten Rotationsachse (Y Y1) ist, und sich ein weiterer Schlitten (28) entlang einer horizontalen Achse (x x1), die in der durch die erste Rotationsachse (X X1) gehenden vertikalen Ebene enthalten ist, bewegen.

FIG. 1

0 133 411

Fig 2

FIG. 3

0 133 411